(19) Europäisches Patentamt
European Patent Office
Office européen des brevets

(11) **EP 2 902 812 A1**

(12) **EUROPÄISCHE PATENTANMELDUNG**

(43) Veröffentlichungstag:
05.08.2015   Patentblatt 2015/32

(51) Int Cl.:
*G01V 8/14* (2006.01)          *G01C 3/00* (2006.01)
*G01S 17/08* (2006.01)          *G01V 8/22* (2006.01)

(21) Anmeldenummer: 14153614.4

(22) Anmeldetag: 03.02.2014

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Leuze electronic GmbH + Co KG
73277 Owen/Teck (DE)**

(72) Erfinder: **Aldiek, Norbert
73230 Kirchheim/Teck (DE)**

(74) Vertreter: **Ruckh, Rainer Gerhard
Jurastrasse 1
73087 Bad Boll (DE)**

(54) **Sensor zur Abstandsmessung**

(57)    Die Erfindung betrifft einen Sensor (1) umfassend wenigstens einen einen Sendelichtstrahlen (3) emittierenden Sender (4) und wenigstens einen eine Empfangsapertur (9, 9') aufweisenden Empfänger (6), welcher in Abstand zu dem Sender (4) liegt, sowie eine Auswerteeinheit (7) zur Auswertung von Empfangssignalen des Empfängers (6). Mit dem Sensor (1) wird der Abstand eines Reflektors (10) bestimmt. Der Reflektor (10) ist als strahlteilender Reflektor ausgebildet, wobei auf den strahlteilenden Reflektor auftreffende Sendelichtstrahlen (3) als Empfangslichtstrahlen (5, 5') derart an diesem reflektiert werden, dass die Empfangslichtstrahlen (5, 5') in wenigstens zwei Teilstrahlenbündeln aufgeteilt werden, welche jeweils einen Winkelversatz zu den Sendelichtstrahlen (3) aufweisen. Ein Teilstrahlenbündel ist auf den wenigstens einen Empfänger (6) geführt. Die dadurch generierten Empfangssignale werden in der Auswerteeinheit (7) als Maß für den Abstand des Reflektors (10) zum Sensor (1) ausgewertet.

Fig. 1

EP 2 902 812 A1

**Beschreibung**

Die Erfindung betrifft einen Sensor gemäß dem Oberbegriff des Anspruchs 1.

Mit derartigen Sensoren erfolgt generell eine Distanzmessung gegen ein kooperatives Ziel, insbesondere gegen einen Reflektor. Derartige Sensoren werden in vielfältigen Applikationen der Automatisierungstechnik eingesetzt. Ein Beispiel hierfür ist die Distanzbestimmung von einem Bezugspunkt zu einem fahrbaren Hängeförderer. Die Distanzmessung erfolgt in diesem Fall gegen einen am Hängeförderer angebrachten Reflektor. Prinzipiell kann die Distanzmessung nach einem Pulslaufzeitverfahren erfolgen, was jedoch konstruktiv aufwändig und teuer ist.

Eine besonders einfache Möglichkeit der Distanzmessung besteht darin, dass der Sender des Sensors Sendelichtstrahlen zum Reflektor sendet und dann im Empfänger nur die Lichtmenge der vom Reflektor zurückreflektierten Empfangslichtstrahlen ausgewertet wird, das heißt, es erfolgt eine Amplitudenbewertung der Empfangssignale des Empfängers. In einem relativ großen Abstandsbereich steigt die Amplitude des Empfangssignals mit geringer werdender Distanz zum Sensor, so dass die Amplitude des Empfangssignals des Empfängers als Maß für die Distanz des Reflektors herangezogen werden kann.

Problematisch hierbei ist jedoch, dass bei einer Verschmutzung des Reflektors die Amplitude des Empfangssignals ebenso sinkt, wie wenn die Distanz des Reflektors zum Sensor größer wird. Dies aber bedeutet, dass derartige Verschmutzungseffekte nicht von regulären Distanzänderungen im Sensor unterschieden werden können. Dies aber führt zu Fehlinformationen bei der Durchführung der Distanzmessungen, die zu erheblichen Sicherheitsrisiken führen können. Derartige Sicherheitsrisiken sind jedoch bei sicherheitsrelevanten Systemen, wie sie insbesondere Hängeförderer darstellen, nicht hinnehmbar.

Der Erfindung liegt die Aufgabe zugrunde, einen Sensor der eingangs genannten Art bereitzustellen, mittels dessen mit geringem konstruktivem Aufwand eine sichere Distanzmessung gegen ein kooperatives Ziel durchgeführt werden kann.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft einen Sensor umfassend wenigstens einen einen Sendelichtstrahlen emittierenden Sender und wenigstens einen eine Empfangsapertur aufweisenden Empfänger, welcher in Abstand zu dem Sender liegt, sowie eine Auswerteeinheit zur Auswertung von Empfangssignalen des Empfängers. Mit dem Sensor wird der Abstand eines Reflektors bestimmt. Der Reflektor ist als strahlteilender Reflektor ausgebildet, wobei auf den strahlteilenden Reflektor auftreffende Sendelichtstrahlen als Empfangslichtstrahlen derart an diesem reflektiert werden, dass die Empfangslichtstrahlen in wenigstens zwei Teilstrahlenbündeln aufgeteilt werden, welche jeweils einen Winkelversatz zu den Sendelichtstrahlen aufweisen. Ein Teilstrahlenbündel ist auf den wenigstens einen Empfänger geführt. Die dadurch generierten Empfangssignale werden in der Auswerteeinheit als Maß für den Abstand des Reflektors zum Sensor ausgewertet.

Der Grundgedanke der Erfindung besteht darin, dass mit dem Sensor eine Distanzmessung gegen ein kooperatives Ziel ausgeführt wird, das von einem strahlteilenden Reflektor gebildet ist. Im Gegensatz zu einem Retroreflektor wird bei dem strahlteilenden Reflektor aus den auftreffenden Sendelichtstrahlen durch die Reflexion an der Reflektorfläche nicht ein parallel zu den Sendelichtstrahlen verlaufendes Empfangslichtstrahlenbündel erzeugt, sondern wenigstens zwei Teilstrahlenbündel die einen Winkelversatz zu den Sendelichtstrahlen aufweisen, das heißt die Teilstrahlenbündel verlaufen jeweils in einem vorgegebenen Winkel zu den Sendelichtstrahlen. Durch eine Anpassung der Sender-/ Empfängeranordnung an diesen Strahlverlauf wird mit dem erfindungsgemäßen Sensor eine Distanzmessung ermöglicht, die nicht nur präzise ist sondern auch unempfindlich gegen Störeinflüsse wie Verschmutzungen des strahlteilenden Reflektors.

Gemäß einer ersten Variante erfolgt die Abstandsbestimmung durch eine einfache Amplitudenbestimmung des oder der Empfänger des Sensors. Hier wird generell die Abstandsabhängigkeit der auf einen Empfänger auftreffenden Lichtmenge ausgenutzt. Da der Empfänger in einem bestimmten Abstand zum Sender liegt, wird allgemein bei sehr großen und sehr geringen Abständen des strahlteilenden Reflektors zum Sensor eine geringe Lichtmenge auf den Empfänger treffen. In einem mittleren Entfernungsbereich steigt jedoch die Signalamplitude stetig mit geringer werdender Distanz des strahlteilenden Reflektors. In diesem mittleren Entfernungsbereich liefern somit die Amplituden der Empfangssignale des Empfängers ein exaktes Maß für die Distanz des strahlenteilenden Reflektors. Insbesondere können die Empfangssignale auch für eine sichere Abstandsregelung herangezogen werden.

Gemäß einer besonders vorteilhaften Ausgestaltung der Erfindung weist der Sensor zwei Empfänger auf, wobei deren Empfangsaperturen in unterschiedlichen Abständen zum Sender liegen. Ein am strahlteilenden Reflektor reflektiertes Teilstrahlenbündel ist auf einen der Empfänger geführt.

Zur Distanzbestimmung des strahlteilenden Reflektors werden dann in der Auswerteeinheit die Amplituden der Empfangssignale miteinander in Beziehung gesetzt. Vorteilhaft wird eine Funktion gebildet, die dem Quotienten der Differenz der Empfangssignale der Empfänger und der Summe dieser Empfangssignale entspricht. Diese Funktion liefert unabhängig von einer eventuellen Verschmutzung des strahlteilenden Reflektors ein exaktes Maß für die Distanz dieses strahlteilenden Reflektors.

Gemäß einer hierzu gleichwertigen Ausführungsform weist der Sensor zwei in unterschiedlichen Abständen zu einem Empfänger liegende Sender auf, welche alternierend aktiviert sind.

In diesem Fall werden die für unterschiedlich aktivierte Sender registrierten Empfangssignale einzeln registriert und miteinander in Beziehung gesetzt.

Ein genereller Vorteil der Abstandsmessung durch eine Amplitudenbewertung der Empfangssignale besteht darin, dass die Empfängeranordnung einen einfachen Aufbau aufweisen kann. Insbesondere kann der oder jeder Empfänger aus einer einfachen Photodiode bestehen.

Gemäß einer zweiten Variante der Erfindung erfolgt die Distanzbestimmung mittels einer Triangulationsmessung.

Hierzu weist der Sensor wenigstens einen positionsempfindlichen Empfänger auf, auf welchen ein vom strahlteilenden Reflektor zurückreflektiertes Teilstrahlenbündel geführt ist.

Beispielsweise ist der positionsempfindliche Empfänger von einem PSD-Element, einer CCD-Zeile, einer CMOS-Zeile oder von einer Anordnung diskreter Detektoren gebildet.

Vorteilhaft ist dem positionsempfindlichen Empfänger eine Zylinderlinse oder ein Linsenarray vorgeordnet.

In diesem Fall wird zur Distanzmessung nur einer der am strahlteilenden Reflektor generierten Teilstrahlenbündel benötigt, wobei allgemein der Auftreffpunkt des Teilstrahlbündels auf dem positionsempfindlichen Empfänger als Maß für die Distanz des strahlteilenden Reflektors ausgewertet wird. Prinzipiell können auch zwei positionsempfindliche Empfänger vorgesehen sein, wobei auf jeden positionsempfindlichen Empfänger ein Teilstrahlenbündel geführt ist. In diesem Fall wird eine redundante Distanzmessung erhalten, so dass der Sensor auch für sicherheitsrelevante Applikationen im Personenschutz eingesetzt werden kann.

Auch diese Distanzmessung ist unabhängig von Verschmutzungen des strahlteilenden Reflektors. Weiterhin kann auch diese Methode der Distanzmessungen für eine Abstandsregelung verwendet werden.

Gemäß einer vorteilhaften Ausgestaltung der Erfindung weist der strahlteilende Reflektor eine Eintrittsfläche auf, welche eine Dachstruktur aufweist. Auf der Eintrittsfläche werden auftreffende Sendelichtstrahlen an der Dachstruktur so gebrochen, dass die reflektierten Empfangslichtstrahlen in wenigstens zwei Teilstrahlenbündel aufgeteilt sind.

Insbesondere weist der strahlteilende Reflektor eine Tripelanordnung auf, an welche die Dachstruktur angepasst ist.

Vorteilhaft sind die Dachstrukturen aus einer Mehrfachanordnung von Dachelementen gebildet, deren Breiten gleich groß wie die der Tripel der Tripelanordnung sind oder nur geringfügig von diesen abweichen.

Wenn die Breiten der Dachelemente den Breiten der Tripel entsprechen und die Dachelemente einen dreieckigen Querschnitt aufweisen, werden mit der so ausgebildeten Dachstruktur zwei Teilstrahlenbündel beidseits der Sendeapertur des Senders generiert.

Wenn die Breiten der Dachelemente dagegen geringfügig größer oder kleiner als die Breiten der Tripel sind, werden bei einem dreieckigen Querschnitt der Dachelemente insgesamt drei Teilstrahlenbündel erzeugt.

Wenn die Breiten der Dachelemente den Breiten der Tripel entsprechen und die Dachelemente keinen dreieckigen sondern mehreckigen, polygonalen Querschnitt aufweisen, werden mit der so ausgebildeten Dachstruktur vier Teilstrahlenbündel erhalten, welche symmetrisch zum Sender liegen.

Diese Beispiele zeigen, dass durch die Vorgabe der Geometrie der Dachelemente die Anzahl und auch die räumlichen Verläufe der generierten Teilstrahlenbündel variabel vorgegeben werden können, wodurch eine optische Anpassung der Teilstrahlenbündel an die Position der Empfangsapertur vorgenommen werden kann.

Gemäß einer vorteilhaften Weiterbildung der Erfindung ist der Abstand zwischen einem Sender und einem Empfänger veränderbar, wobei durch eine Variation dieses Abstands der Arbeitsbereich des Sensors einstellbar ist.

Dadurch wird auf einfache Weise eine applikationsspezifische Anpassung des Sensors ermöglicht.

Vorteilhaft ist bei dem erfindungsgemäßen Sensor der oder jeder Sender von einer Leuchtdiode gebildet. Prinzipiell können auch Laserdioden als Sender eingesetzt werden.

Zur Unterdrückung von gerichteten Reflexionen von Objektoberflächen können bei dem Sensor Polarisationsfolien und dergleichen eingesetzt werden.

Der Sender und der oder die Empfänger des Sensors können in einem gemeinsamen Gehäuse untergebracht sein oder auch separate Einheiten bilden.

Generell kann der strahlteilende Reflektor auch als Reflektor mit mehreren Segmenten ausgebildet sein, die zum Beispiel auf einer Zylinderfläche liegen. Dies kann dann vorteilhaft zu einer Signalerhöhung führen, wenn der zu detektierende strahlteilende Reflektor eine Kurvenfahrt an einem Fahrzeug oder dergleichen ausführt.

Die Erfindung wird im Folgenden anhand der Zeichnungen erläutert. Es zeigen:

Figur 1:    Schematische Darstellung eines ersten Ausführungsbeispiels.

Figur 2:    Darstellungen eines Tripels des Reflektors für den Sensor gemäß Figur 1

a)       ohne Dachstruktur

b)      mit einem ersten Dachelement als Bestandteil einer Dachstruktur

c)      mit einem zweiten Dachelement als Bestandteil einer Dachstruktur.

Figur 3:      Schematische Darstellung der mit der Anordnung gemäß Figur 2b oder 2c generierten Teilstrahlenbündel relativ zu der Sendeapertur des Sensors gemäß Figur 1.

Figur 4:      Erste Ausführungsform einer Tripelanordnung eines Reflektors mit einer Dachstruktur

a)      in einer Querschnittsdarstellung

b)      in einer Draufsicht.

Figur 5:      Zweite Ausführungsform einer Tripelanordnung eines Reflektors mit einer Dachstruktur

a)      in einer Querschnittsdarstellung

b)      in einer Draufsicht.

Figur 6:      Empfangssignalverlauf in Abhängigkeit des Reflektorenabstands für einen aus dem Stand der Technik bekannten Sensor.

Figur 7:      Empfangssignalverlauf in Abhängigkeit des Reflektorabstands für den Sensor gemäß Figur 1.

Figur 8a:      Zweites Ausführungsbeispiel des erfindungsgemäßen Sensors.

Figur 8b:      Darstellung der Anordnung von Figur 8a in Richtung des Sensors.

Figur 9:      Drittes Ausführungsbeispiel des erfindungsgemäßen Sensors.

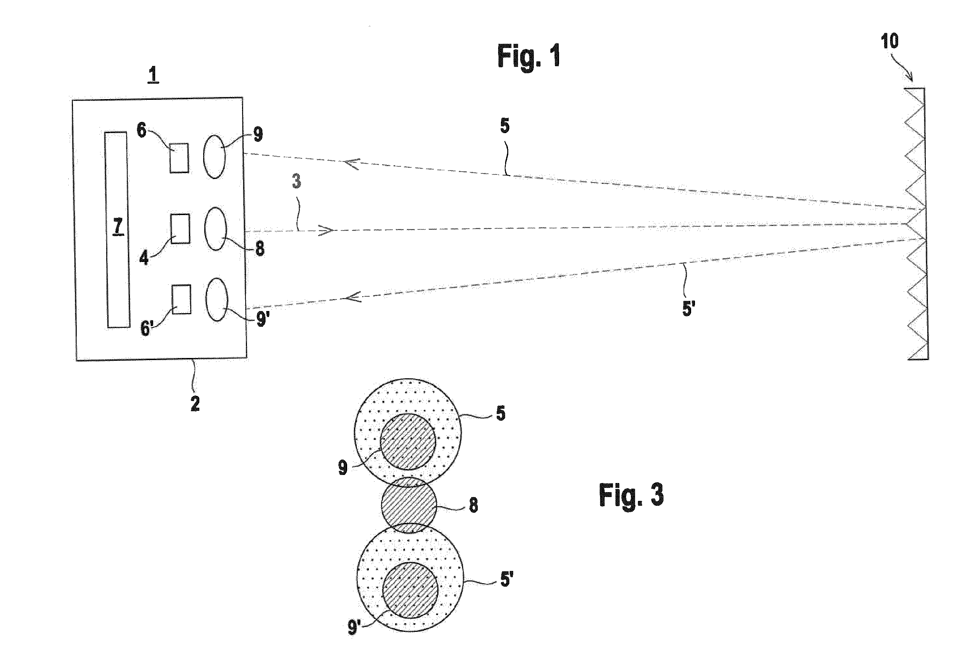

Figur 1 zeigt schematisch den prinzipiellen Aufbau eines ersten Ausführungsbeispiels des erfindungsgemäßen Sensors 1. Der Sensor 1 weist ein Gehäuse 2 auf, in welchem ein Sendelichtstrahlen 3 emittierender Sender 4, zwei Empfangslichtstrahlen 5, 5' empfangende Empfänger 6, 6' und eine Auswerteeinheit 7 fest angeordnet sind. Der Sender 4 kann von einer Leuchtdiode, die Empfänger 6, 6' von einer Photodiode und die Auswerteeinheit 7 von einem Mikroprozessor gebildet sein. Dem Sender 4 ist eine Sendeapertur 8 in Form einer Sendeoptik, den Empfängern 6, 6' jeweils eine Empfangsapertur 9, 9' in Form einer Empfangsoptik zugeordnet. Sowohl die Sendeoptik als auch die Empfangsoptiken bestehen im vorliegenden Fall aus einer einzelnen Linse. Die Linsen sind ebenfalls ortsfest im Gehäuse 2 angeordnet. Die Empfänger 6, 6' sind in unterschiedlichen Abständen zum Sender 4 angeordnet. Vorteilhaft sind diese Abstände einstellbar.

Mit dem Sensor 1 erfolgt eine Abstandsmessung gegen ein kooperatives Ziel, dass von einem Reflektor 10 gebildet ist. Beispielsweise kann der Sensor 1 an einem ersten fahrbaren Hängeförderer angeordnet sein um einen an einem zweiten fahrbaren Hängebahnförderer angeordneten Reflektor 10 zu detektieren und so den Abstand zwischen den Hängebahnförderern zu bestimmen. Vorteilhaft ist in der Auswerteeinheit 7 eine Abstandsregelung integriert, so dass der Abstand zum Hängebahnförderer geregelt werden kann.

Die Entfernungsbestimmung erfolgt bei dem vorliegenden Ausführungsbeispiel durch eine reine Amplitudenbewertung der Empfangssignale der Empfänger 6.

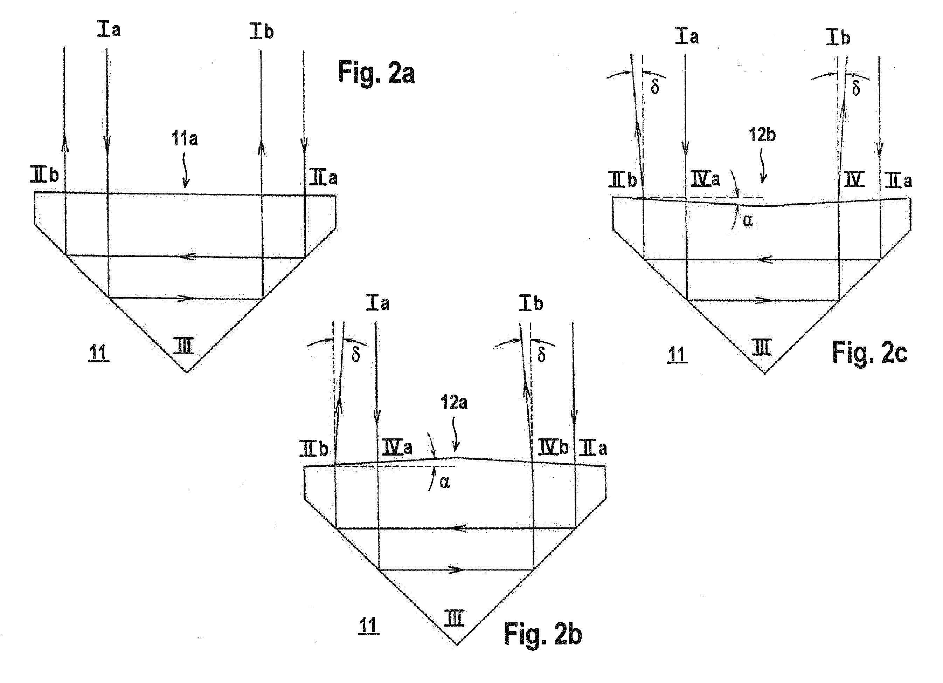

Dabei wird erfindungsgemäß ein strahlteilender Reflektor als Reflektor 10 verwendet, wie beispielsweise in den Figuren 2b, 2c beschrieben. Die Ausbildung des erfindungsgemäßen strahlteilenden Reflektors gemäß den Figuren 2b, 2c wird im Folgenden im Vergleich zu einem aus dem Stand der Technik bekannten, in Figur 2a dargestellten Reflektor 10 erläutert.

Figur 2a zeigt schematisch in einer Schnittdarstellung einen Tripel 11 eines aus dem Stand der Technik bekannten Reflektors 10, der aus einer Mehrfachanordnung derartiger Tripel 11 besteht. Dieser Tripel 11 weist ein ebenes Flächenelement 11a als Eintrittsfläche auf, auf die die Sendelichtstrahlen 3 auftreffen. Die Eintrittsfläche bildet zugleich die Austrittsfläche des Tripels 11 für die Empfangslichtstrahlen 5. Der Tripel 11 besteht vorzugsweise aus transparentem Kunststoff.

Wie aus Figur 2a ersichtlich, treffen die einfallenden Lichtstrahlen Ia, IIa senkrecht auf die Eintrittsfläche und werden dann an einer ersten Schrägfläche des Tripels 11 reflektiert, so dass sie als Lichtstrahlen III senkrecht abgelenkt werden und dann an der zweiten beziehungsweise dritten Schrägfläche des Tripels 11 nochmals reflektiert werden. Dadurch sind die ausfallenden Lichtstrahlen Ib, IIb parallel versetzt zu den einfallenden Lichtstrahlen.

Bei den erfindungsgemäßen Tripeln 11 gemäß den Figuren 2b, 2c bildet die Eintritts- beziehungsweise Austrittsfläche ein Dachelement 12a aus. Bei der Ausführungsform der Figur 2b verlaufen zwei Flächensegmente in einem Winkel $\alpha$ auf eine erhöht liegende zentrale Kante zu, so dass das Dachelement 12a satteldachförmig mit einem dreieckigen Querschnitt ausgebildet ist. Bei der Ausführungsform der Figur 2c verlaufen zwei Flächensegmente in einem Winkel $\alpha$ auf eine vertieft liegende zentrale Kante zu, so dass das Dachelement 12a rinnenförmig mit einem dreieckigen Querschnitt ausgebildet ist.

Die auf die Dachelemente 12a, 12b gemäß den Figuren 2b und 2c auftreffenden Lichtstrahlen Ia, IIa werden an diesen gebrochen, so dass für die austretenden

Lichtstrahlen ein Winkelversatz $\delta$ auftritt. Dies führt zu einer Aufspaltung der Empfangslichtstrahlen 5 in zwei Teilstrahlenbündel, welche symmetrisch zur Sendeapertur 8 liegen.

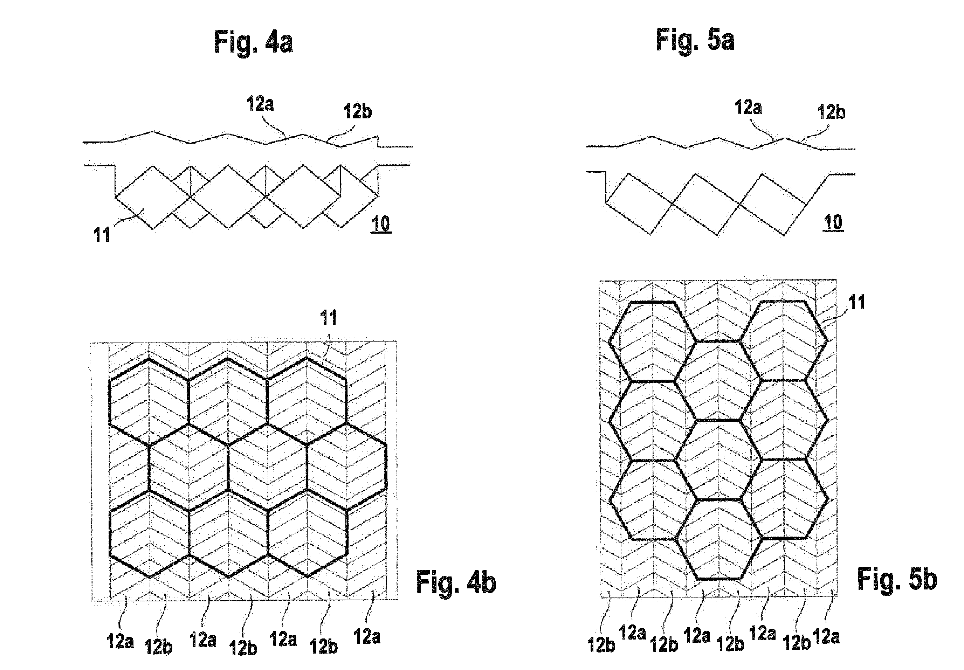

Die Figuren 4a und 4b zeigen eine erste Ausführung eines Reflektors 10 mit einer Dachstruktur, die aus den Dachelementen 12a und 12b bestehen. Die drei Reflexionsflächen eines jeden Einzeltripel seien quadratisch. Die Figuren 5a und 5b zeigen eine weitere Ausführungsform des Reflektors 10.

Die Figuren 4a und 5a zeigen jeweils einen seitlichen Blick in den Reflektor 10. Zu erkennen sind die Bereiche der Einzeltripel als auch die oberhalb der Einzeltripel auf der Eintrittsfläche aufgebrachte Dachstruktur. Die Dachelemente 12a sind Flächen mit steigender Flanke, die in den Figuren 4b und 5b durch eine aufsteigende Schraffur dargestellt sind. Die Dachelemente 12b sind Flächen mit fallender Flanke, die in den Figuren 4b und 5b durch eine abfallende Schraffur dargestellt sind. Die Dachelemente 12a und 12b besitzen gleiche Breiten.

Figur 4b zeigt einen senkrechten Blick auf die Eintrittsfläche eines Reflektors 10, der aus drei Reihen mit je drei Tripelprismen besteht. Der Blick zeigt hexagonal begrenzte Einzeltripel, bei der alle drei Flächen in ihrer gesamten Ausdehnung zur Retroreflexion beitragen. Die Breite eines Dachelements 12a zusammen mit der eines benachbarten Dachelementes 12b entspricht der Breite eines einzelnen Tripelprismas 11. Die zweite Prismenreihe ist zur ersten und dritten Reihe versetzt angeordnet. Die Dachstruktur oberhalb der Einzeltripel der oberen und unteren Prismenreihe besitzt jeweils links eine aufsteigende Flanke 12a und rechts der senkrecht verlaufenden Symmetrieachse der dargestellten hexagonalen Fläche als Dachelement 12b eine abfallende Flanke und entspricht damit einer Ausprägung wie in Figur 2b. Die Dachstruktur oberhalb der Einzeltripel der mittleren Prismenreihe besitzt als Dachelement 12b links eine abfallende Flanke und rechts der Symmetrieachse als Dachelement 12a eine aufsteigende Flanke und entspricht damit einer Ausprägung wie in Figur 2c. Allen Flächenelementen eines jeden Einzeltripel wird links der Symmetrieachse ein anderes Dachelement 12a, 12b als rechts der Symmetrieachse zugeordnet. Eine senkrechte Bestrahlung führt deshalb in Reflexion zu einer Strahlteilung in zwei Strahlenbündel.

Figur 5b zeigt einen senkrechten Blick auf die Eintrittsfläche eines Reflektors 10, der aus drei Spalten mit je drei Tripelprismen besteht.

Die Breite eines Dachelements 12a zusammen mit der eines benachbarten Dachelementes 12b entspricht dem $0{,}75^{0,5}$ - Fachen der Breite eines einzelnen Tripelprismas. Die Dachstruktur oberhalb der Einzeltripel zeigt links im Wesentlichen eine abfallende Flanke und entspricht damit im Wesentlichen einer Ausprägung wie in Figur 2b. Allen Flächenelementen eines jeden Einzeltripel wird links der Symmetrieachse ein anderes Dachelement als rechts der Symmetrieachse zugeordnet. Eine senkrechte Bestrahlung führt deshalb führt deshalb in Reflexion zu einer Strahlteilung in zwei Strahlenbündel.

Durch die Verwendung eines strahlteilenden Reflektors wie in den Figuren 2b, 2c und 4a, 4b, 5a, 5b beschrieben, wird für den Sensor 1 gemäß Figur 1 der dort dargestellte Verlauf der die Empfangslichtstrahlen 5, 5' bildenden Teilstrahlenbündel erhalten. Dies führt zu einer Beaufschlagung der Empfangsaperturen 9, 9' mit den Teilstrahlenbündeln wie in Figur 3 dargestellt. Wie aus Figur 3 ersichtlich, liegen die Empfangsaperturen 9, 9' der Empfänger 6 in unterschiedlichen Abständen zu der Sendeapertur 8. Da die Sendelichtstrahlen 3 bei der Reflexion am strahlteilenden Reflektor in symmetrischer Weise in die von den Empfangslichtstrahlen 5, 5' gebildeten Teilstrahlenbündel aufgespalten werden, sind die Empfangslichtverteilungen der Empfangslichtstrahlen 5, 5' entsprechend symmetrisch zu der Sendeapertur 8, wie Figur 3 weiterhin zeigt. Die Relativlagen der Empfangsaperturen 9, 9' zu den jeweiligen Empfangslichtverteilungen sind unterschiedlich.

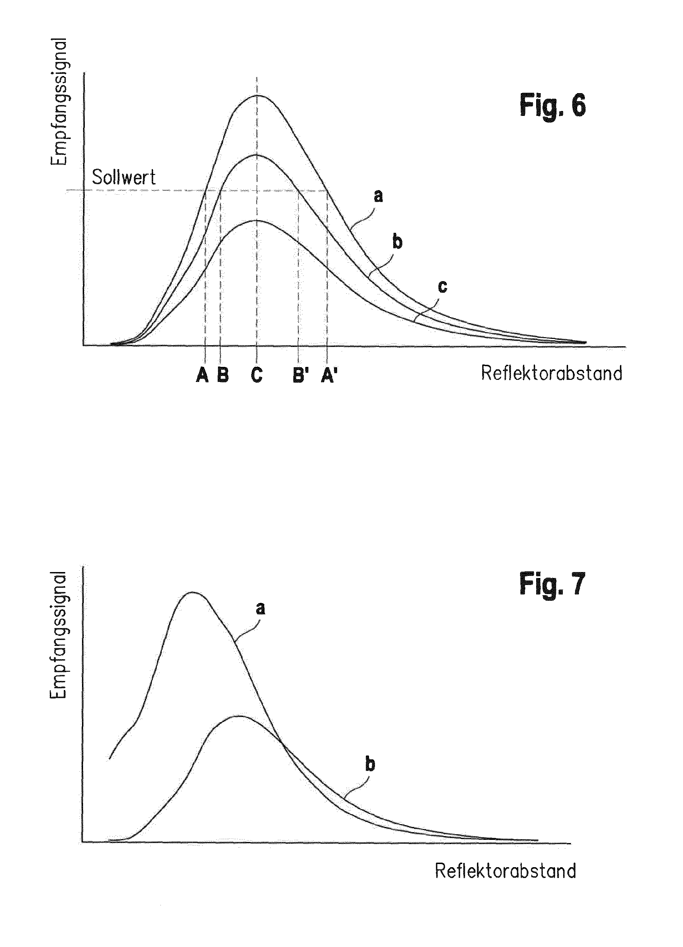

Bevor die mit dem Sensor 1 gemäß den Figuren 1 und 3 durchgeführte Distanzmessung erläutert wird, wird unter Bezug auf Figur 6 ein aus dem Stand der Technik bekannter Sensor erläutert, der nur einen Empfänger 6 in Abstand zum Sender 4 aufweist, und der gegen einen herkömmlichen Retroreflektor (wie in Figur 2a dargestellt) Distanzmessungen durchführt. Figur 6 zeigt für diesen Sensor 1 den Verlauf des Empfangssignals am Empfänger 6 in Abhängigkeit des Reflektorabstands. Dabei ist mit a der Signalverlauf für einen nicht verschmutzten Reflektor 10, mit b der Signalverlauf für einen schwach verschmutzten Reflektor 10, und mit c der Signalverlauf für einen stark verschmutzten Reflektor 10 dargestellt.

Der prinzipielle Empfangssignalverlauf ist für einen nicht verschmutzten oder verschmutzten Reflektor 10 stets derart, dass er bei einer Distanz C ein Maximum aufweist. Bei Reflektorabständen kleiner als C steigt das Empfangssignal monoton, so dass in diesem Bereich die Amplitude des Empfangssignals als Maß für den Reflektorabstand genutzt werden kann. Gleiches gilt für Abstände größer als C, da dort das Empfangssignal monoton fällt.

Figur 6 veranschaulicht das Problem der Distanzmessung bei eintretender Verschmutzung des Reflektors 10. Wird für einen nicht verschmutzten Reflektor 10 eine Abstandsregelung auf einen Sollwert durchgeführt, der dem Abstand A entspricht, so tritt eine Verfälschung der Distanzmessung auf, wenn bei leichter Verschmutzung die Empfangssignalkurve b erhalten wird. Der Sollwert entspricht dann tatsächlich der größeren Distanz B, wie Figur 6 zeigt. Verschmutzt der Reflektor 10 noch stärker (Empfangssignalkurve c), so kann der Sollwert überhaupt nicht mehr eingeregelt werden. Entsprechendes gilt für die Messwerte A', B' oberhalb von C. Dies zeigt, dass durch die Verschmutzung des Reflektors 10 die Distanzbestimmung durch eine Amplitudenbewertung des Empfangssignals des einen Empfängers 6 bei einem herkömmlichen Sensor 1 fehlerbehaftet ist und dazu führen kann, dass eine Abstandsregelung nicht mehr möglich ist.

Diese Probleme sind bei dem erfindungsgemäßen Sensor 1 gemäß den Figuren 1 und 3 behoben. Bei diesem Sensor 1 sind zwei Empfänger 6 in unterschiedlichen Abständen zum Sender 4 vorgesehen, wobei auf jedem Empfänger 6 eines der am strahlteilenden Reflektor reflektierten Teilstrahlenbündel geführt ist. Dementsprechend werden an den Empfängern 6, 6' unterschiedliche Empfangssignale registriert, die in Figur 7 dargestellt und mit a und b bezeichnet sind. In der Auswerteeinheit 7 wird eine Kombination dieser Empfangssignale a und b als Maß für den Reflektorabstand herangezogen. Vorteilhaft wird in der Auswerteeinheit 7 der Funktionswert f gemäß der folgenden Beziehung gebildet

$$f = (a - b) / (a + b).$$

Mittels einer Look-up-Tabelle oder einem durch Stützstellen repräsentierten Funktionsverlauf kann dann jedem Funktionswert eindeutig ein bestimmter Wert für den Reflektorabstand zugeordnet werden. Da die Verschmutzung des Reflektors 10 sich auf die Empfangssignale a und b unterschiedlich auswirken und diese Einflüsse durch die Bildung der Funktion f eliminiert werden, werden die ermittelten Distanzwerte durch Verschmutzungen des Reflektors 10 nicht verfälscht.

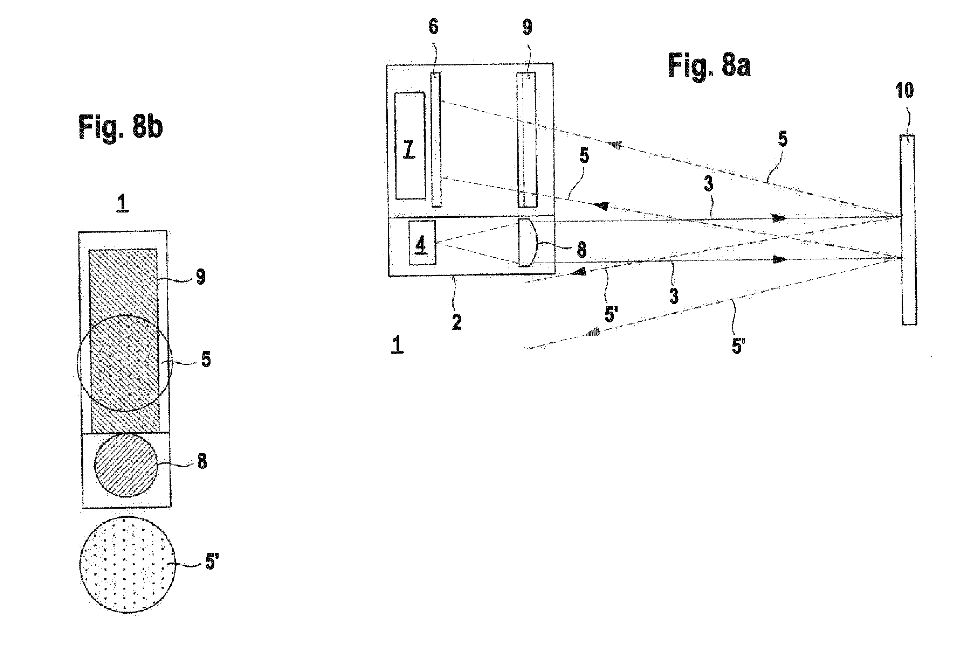

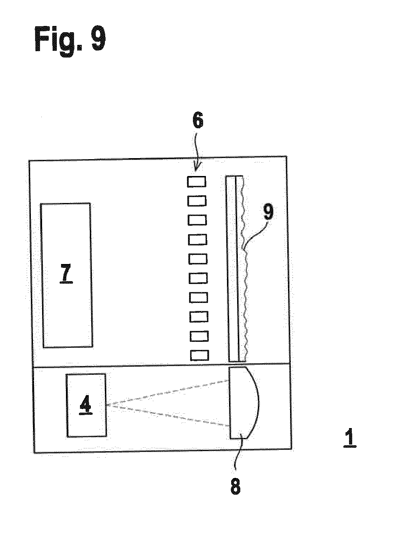

Die Figuren 8a, 8b und 9 zeigen weitere Ausführungsbeispiele des erfindungsgemäßen Sensors 1, bei welchen die Bestimmung des Reflektorabstands durch eine Triangulationsmessung erfolgt. Voraussetzung hierfür ist die Verwendung eines strahlteilenden Reflektors, an welchem die Sendelichtstrahlen 3 in wenigstens zwei Teilstrahlenbündeln mit einem Winkelversatz reflektiert werden. Damit kann ein Teilstrahlenbündel, wie die Beispiele der Figuren 8a, 8b, 9 zeigen, zur Distanzbestimmung derart genutzt werden, dass dessen Auftreffpunkt auf einem positionsempfindlichen Empfänger, der in Abstand zum Sender 4 liegt, bestimmt wird.

Bei der Ausführungsform der Figuren 8a, 8b weist der Sensor 1 ein Gehäuse 2 auf, in welchem ein von einer Leuchtdiode gebildeter Sender 4 mit einer Sendeapertur 8 in Form einer Linse angeordnet sind. Weiterhin befinden sich im Gehäuse 2 eine Auswerteeinheit 7 sowie ein Empfänger 6 in Form eines positionsempfindlichen Empfängers mit einer zugeordneten Empfangsapertur 9. Als positionsempfindlicher Empfänger ist im vorliegenden Fall eine CCD-Zeile vorgesehen. Alternativ könnte eine CMOS-Zeile oder ein PSD-Element vorgesehen sein. Um möglichst viel Empfangslicht auf den positionsempfindlichen Empfänger zu führen ist als Empfangsapertur 9 eine Zylinderlinse vorgesehen.

Wie aus den Figuren 8a, 8b ersichtlich, werden zur Distanzmessung nur die Empfangslichtstrahlen 5, also nur ein Teilstrahlenbündel, das am strahlteilenden Reflektor reflektiert wird, herangezogen.

Bei dem Sensor 1 gemäß Figur 9 ist als positionsempfindlicher Empfänger eine Linearanordnung diskreter Detektoren vorgesehen, welchen als Empfangsapertur 9 ein Linsenarray zugeordnet ist. Ansonsten entspricht der Sensor 1 gemäß Figur 9 hinsichtlich Aufbau und Funktion dem Ausführungsbeispiel der Figuren 8a, 8b.

Bezugszeichenliste

| (1) | Sensor |
|---|---|
| (2) | Gehäuse |
| (3) | Sendelichtstrahlen |
| (4) | Sender |
| (5, 5') | Empfangslichtstrahlen |
| (6, 6') | Empfänger |
| (7) | Auswerteeinheit |
| (8) | Sendeapertur |
| (9, 9') | Empfangsapertur |
| (10) | Reflektor |
| (11) | Tripel |
| (12a, 12b) | Dachelement |

**Patentansprüche**

1. Sensor (1) mit einem Sendelichtstrahlen (3) emittierenden Sender (4), wenigstens einem eine Empfangsapertur (9, 9') aufweisenden Empfänger (6, 6'), welcher in Abstand zu dem Sender (4) liegt, und mit einer Auswerteeinheit (7) zur Auswertung von Empfangssignalen des Empfängers (6), wobei mit dem Sensor (1) der Abstand eines Reflektors (10) bestimmt wird, **dadurch gekennzeichnet, dass** der Reflektor (10) als strahlteilender Reflektor ausgebildet ist, wobei auf den strahlteilenden Reflektor auftreffende Sendelichtstrahlen (3) als Empfangslichtstrahlen (5, 5') derart an diesem reflektiert werden, dass die Empfangslichtstrahlen (5, 5') in wenigstens zwei Teilstrahlenbündeln aufgeteilt werden, welche jeweils einen Winkelversatz zu den Sendelichtstrahlen (3) aufweisen, und wobei ein Teilstrahlenbündel auf den wenigstens einen Empfänger (6) geführt ist und die dadurch generierten Empfangssignale in der Auswerteeinheit (7) als Maß für den Abstand des Reflektors (10) zum Sensor (1) ausgewertet werden.

2. Sensor nach Anspruch 1, **dadurch gekennzeichnet, dass** der strahlteilende Reflektor eine Eintrittsfläche aufweist, welche eine Dachstruktur aufweist, wobei auf die Eintrittsfläche auftreffende Sendelichtstrahlen (3) an der Dachstruktur so gebrochen werden, dass die reflektierten Empfangslichtstrahlen (5, 5') in wenigstens zwei Teilstrahlenbündel aufgeteilt sind.

3. Sensor nach Anspruch 2, **dadurch gekennzeichnet, dass** der strahlteilende Reflektor eine Tripelanordnung aufweist, an welche die Dachstruktur angepasst ist.

4. Sensor nach einem der Ansprüche 1 bis 3, **dadurch gekennzeichnet, dass** dieser zwei Empfänger (6) aufweist, wobei deren Empfangsaperturen (9, 9') in unterschiedlichen Abständen zum Sender (4) liegen, und wobei jeweils ein am strahlteilenden Reflektor reflektiertes Teilstrahlenbündel auf einen der Empfänger (6) geführt ist.

5. Sensor nach einem der Ansprüche 1 bis 3, **dadurch gekennzeichnet, dass** dieser zwei in unterschiedlichen Abständen zu einem Empfänger (6) liegende Sender (4) aufweist, welche alternierend aktiviert sind.

6. Sensor nach einem der Ansprüche 4 oder 5, **dadurch gekennzeichnet, dass** in der Auswerteeinheit (7) zur Abstandsbestimmung die Amplituden der Empfangssignale des oder der Empfänger (6) ausgewertet werden.

7. Sensor nach Anspruch 6, **dadurch gekennzeichnet, dass** der oder jeder Empfänger (6) von einer Photodiode gebildet ist.

8. Sensor nach einem der Ansprüche 1 bis 3, **dadurch gekennzeichnet, dass** dieser wenigstens einen positionsempfindlichen Empfänger (6) aufweist, auf welchen ein vom strahlteilenden Reflektor zurückreflektiertes Teilstrahlenbündel geführt ist.

9. Sensor nach Anspruch 8, **dadurch gekennzeichnet, dass** der positionsempfindliche Empfänger (6) von einem PSD-Element, einer CCD-Zeile, einer CMOS-Zeile oder von einer Anordnung diskreter Detektoren gebildet ist.

10. Sensor nach einem der Ansprüche 8 oder 9, **dadurch gekennzeichnet, dass** dem positionsempfindlichen Empfänger (6) eine Zylinderlinse oder ein Linsenarray vorgeordnet ist.

11. Sensor nach einem der Ansprüche 1 bis 10, **dadurch gekennzeichnet, dass** dieser Mittel für eine Abstandsregelung aufweist.

12. Sensor nach einem der Ansprüche 1 bis 11, **dadurch gekennzeichnet, dass** der Abstand zwischen einem Sender (4) und einem Empfänger (6) veränderbar ist, wobei durch eine Variation dieses Abstands der Arbeitsbereich des Sensors (1) einstellbar ist.

Fig. 1

Fig. 3

Ia   Ib

**Fig. 2a**

11a

IIb   IIa

11   III

Ia   Ib

δ   δ

12a

IIb   IVa   IVb   IIa

α

11   III   **Fig. 2b**

Ia   Ib

δ   δ

12b

IIb   IVa   IV   IIa

α

11   III   **Fig. 2c**

EP 2 902 812 A1

9

# Fig. 4a

# Fig. 5a

Fig. 4b

Fig. 5b

EP 2 902 812 A1

**Fig. 6**

**Fig. 7**

Fig. 8a

Fig. 8b

# Fig. 9

Europäisches Patentamt
European Patent Office
Office européen des brevets

# EUROPÄISCHER RECHERCHENBERICHT

Nummer der Anmeldung

EP 14 15 3614

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 752 799 A (STAUFFER NORMAN L [US]) 21. Juni 1988 (1988-06-21) | 1,4-7 | INV. G01V8/14 |
| Y | * Spalte 2, Zeile 47 - Spalte 4, Zeile 18 * | 2,3,8-12 | G01C3/00 G01S17/08 |
| | * Spalte 11, Zeile 43 - Spalte 13, Zeile 3 * | | G01V8/22 |
| | * Anspruch 5 * * Abbildungen 1, 10, 11 * ----- | | |
| Y | JP S61 81601 U (-) 30. Mai 1986 (1986-05-30) * Abbildung 1 * ----- | 2,3 | |
| Y | US 4 936 676 A (STAUFFER NORMAN L [US]) 26. Juni 1990 (1990-06-26) * Spalte 5, Zeile 28 - Spalte 6, Zeile 35 * | 8,9 | |
| | * Spalte 2, Zeile 37 - Zeile 40 * ----- | | |
| Y | US 5 046 851 A (MORGAN COLIN G [GB]) 10. September 1991 (1991-09-10) * Spalte 7, Zeile 63 - Spalte 8, Zeile 2 * ----- | 10 | |
| Y | JP 2011 069671 A (HOKUYO AUTOMATIC CO) 7. April 2011 (2011-04-07) * Zusammenfassung * ----- | 11 | |
| Y | JP 2006 047242 A (NEC CORP) 16. Februar 2006 (2006-02-16) * Zusammenfassung * * Absatz [0031] * * Abbildung 6 * ----- | 12 | |
| A | JP H05 150368 A (SONY CORP) 18. Juni 1993 (1993-06-18) * Abbildung 9b * ----- | 3 | |

RECHERCHIERTE SACHGEBIETE (IPC)

G01V
G01C
G01S
G02B
G01B

-/--

Der vorliegende Recherchenbericht wurde für alle Patentansprüche erstellt

| Recherchenort | Abschlußdatum der Recherche | Prüfer |
|---|---|---|
| Den Haag | 7. Juli 2014 | Breccia, Luca |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

Nummer der Anmeldung

EP 14 15 3614

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | JP H08 219773 A (OMRON TATEISI ELECTRONICS CO) 30. August 1996 (1996-08-30) <br> * Zusammenfassung * <br> * Abbildung 1 * <br> ----- | 1 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 7. Juli 2014 | Breccia, Luca |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

.................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 15 3614

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-07-2014

| Im Recherchenbericht angeführtes Patentdokument | Datum der Veröffentlichung | Mitglied(er) der Patentfamilie | Datum der Veröffentlichung |
|---|---|---|---|
| US 4752799 A | 21-06-1988 | EP 0281085 A2<br>JP S63298115 A<br>US 4752799 A | 07-09-1988<br>05-12-1988<br>21-06-1988 |
| JP S6181601 U | 30-05-1986 | KEINE | |
| US 4936676 A | 26-06-1990 | EP 0183240 A2<br>JP S61132818 A<br>US 4936676 A | 04-06-1986<br>20-06-1986<br>26-06-1990 |
| US 5046851 A | 10-09-1991 | DE 3887325 D1<br>DE 3887325 T2<br>EP 0349553 A1<br>JP H02502307 A<br>JP H07104127 B2<br>US 5046851 A<br>WO 8807173 A1 | 03-03-1994<br>05-05-1994<br>10-01-1990<br>26-07-1990<br>13-11-1995<br>10-09-1991<br>22-09-1988 |
| JP 2011069671 A | 07-04-2011 | JP 4461199 B1<br>JP 2011069671 A | 12-05-2010<br>07-04-2011 |
| JP 2006047242 A | 16-02-2006 | KEINE | |
| JP H05150368 A | 18-06-1993 | KEINE | |
| JP H08219773 A | 30-08-1996 | KEINE | |

EPO FORM P0461

Für nähere Einzelheiten zu diesem Anhang : siehe Amtsblatt des Europäischen Patentamts, Nr.12/82